# EUROPEAN PATENT APPLICATION

(11) **EP 3 288 297 A1**
(43) Date of publication of application: **28.02.2018**
(21) Application number: 16306073.4
(22) Date of filing: 22.08.2016
(51) Int. Cl.: H04W 4/00, H04W 4/06

(54) **SUPPORT OF GROUP BASED MESSAGE DELIVERY IN A MOBILE SYSTEM**

(71) Applicant: Nokia Technologies Oy, 02610 Espoo (FI)
(72) Inventor: SUDARSAN, Padmavathi, Naperville, IL 60563-1594 (US); LAHA, Subhasis, Naperville, IL 60563-1594 (US); LANDAIS, Bruno, 22304 Lannion (FR); TOTA, Ranga, Naperville, IL 60563-1594 (US)
(74) Representative: El Manouni, Josiane

(57) **Abstract**

Embodiments of the invention include a serving node of a mobile network, such as MME or SGSN, configured to:
- support message delivery towards UEs via the serving node, said message delivery referred to as group based message delivery, wherein a message to be delivered to a group of UEs is received by the serving node via a SCEF only once for the group of UEs.

## Description

The present invention generally relates to mobile communication networks and systems.

Descriptions of mobile communication networks and systems can be found in the literature, such as in particular in Technical Specifications published by standardization bodies such as for example 3GPP (3^{rd} Generation Partnership Project).

In such systems, a User Equipment (UE) can have access via a mobile network to applications in external networks (also called Packet Data Network PDN). A mobile network generally comprises a Core Network (CN) that can be accessed via a Radio Access Network (RAN).

An example of 3GPP system is EPS (Evolved Packet System). An example of mobile network is an EPS network comprising a Core Network called EPC (Evolved Packet Core) that can be accessed via a 4G based RAN (also called E-UTRAN) or via a 2G/3G based RAN (also called GERAN/UTRAN). Evolved Packet System EPS is specified in particular in 3GPP TS 23.401 for E-UTRAN access and in 3GPP TS 23.060 for GERAN/UTRAN access. Next generation systems, including a Core Network that can be accessed via a 5G based RAN, are in the process of being specified.

Architecture enhancements to facilitate communications with packet data networks and applications (e.g. Machine Type Communication (MTC) applications on the (external) network/MTC servers) are specified in particular in 3GPP TS 23.682.

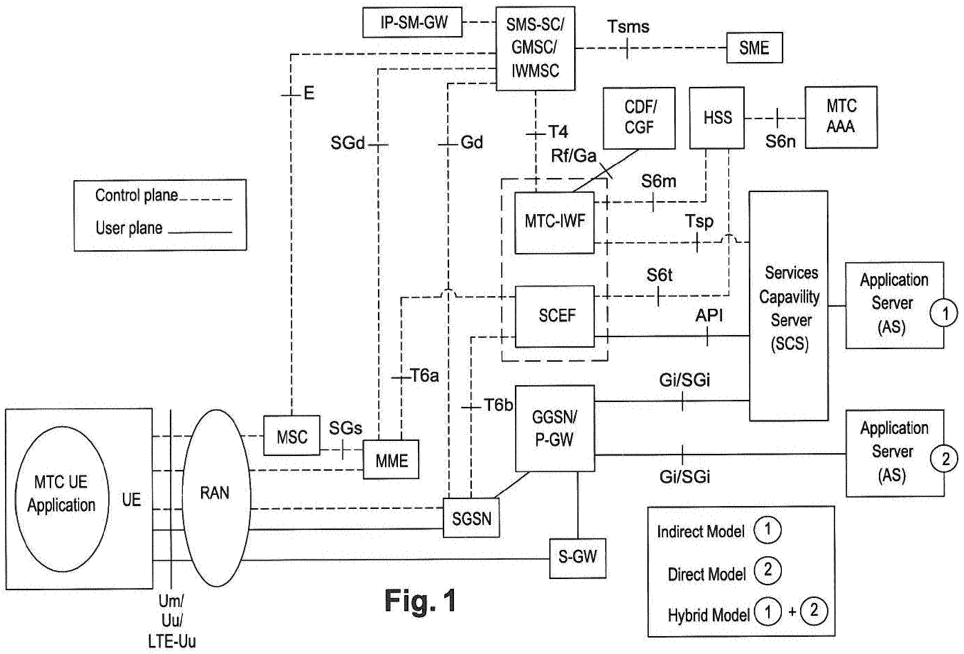

An example of architecture for MTC communication is recalled in Figure 1 taken from 3GPP TS 23.682. The end-to-end communication between the MTC Application in the UE and the MTC Application in the external network uses services provided by a 3GPP system, and optionally services provided by a Services Capability Server (SCS). The MTC Application in the external network is typically hosted by an Application Server (AS) and may make use of an SCS for additional value added services. The 3GPP system provides transport, subscriber management and other communication services including various architectural enhancements motivated by, but not restricted to, MTC (e.g. device triggering).

As recognized by the inventors, and as will be described with more detail, there is a need for an improved support of message delivery in such systems. In particular, there is a need for a new mechanism for message delivery towards a group of UEs (e.g. group of MTC devices) via a serving node (e.g. MME, SGSN, 5G Core Control Function), that reduces drastically the amount of signaling (in particular between SCEF and serving node) for message delivery towards a potentially very large number of devices which may use power saving functions such as PSM or extended idle mode DRX.

Embodiments of the present invention in particular address such needs.

These and other objects are achieved, in one aspect, by a serving node of a mobile network, such as MME or SGSN, configured to:
- support message delivery towards UEs via the serving node, said message delivery referred to as group based message delivery, wherein a message to be delivered to a group of UEs is received by the serving node via a SCEF only once for the group of UEs.

These and other objects are achieved, in another aspect, by a Service Capability Exposure Function SCEF, configured to:
- support message delivery towards UEs via a serving node such as MME or SGSN, said message delivery referred to as group based message delivery, wherein a message to be delivered to a group of UEs is sent by the SCEF to the serving node only once for the group of UEs.

These and other objects are achieved, in another aspect, by a method for support of group based message delivery in a mobile system, comprising at least one step performed by a thus configured serving node and/or SCEF.

Some embodiments of apparatus and/or methods in accordance with embodiments of the present invention are now described, by way of example only, and with reference to the accompanying drawings, in which:
- Figure 1 is intended to recall an example of 3GPP architecture for MTC (Machine Type Communication),
- Figure 2 is intended to recall an example of signaling flow for MT NIDD (Mobile Terminated Non-IP Data Delivery) procedure,
- Figure 3 is intended to illustrate in a simplified way an example of signaling flow for group based message delivery according to embodiments of the invention.

### Abbreviations

- AS: Application Server
- DRX: Discontinuous Reception
- EPS: Evolved Packet System
- HSS: Home Subscriber Server
- loT: Internet of Things
- MBMS: Multimedia Broadcast Multicast Service
- MME: Mobility Management Entity
- NIDD: Non-IP Data Delivery
- PSM: Power Saving Mode
- SCEF: Service Capability Exposure Function
- SCS: Service Capability Server
- SGSN: Serving GPRS Support Node
- UE: User Equipment

### Description of various aspects and/or embodiments of the invention

Deployment of loT devices (UEs) is growing exponentially. By 2020, tens of billions of loT devices will be deployed worldwide. These loT devices are deployed in different verticals and, typically, groups of similar devices in a geographical area may be controlled by the same application. Many of these devices are likely to be deployed with a power saving function, such as extended idle mode DRX cycle (i.e. extended discontinuous reception) or PSM (Power Saving Mode), to increase battery life. Similar loT devices in a geographical area will need to be instructed in a similar manner. This will require sending the same application layer message to a large group of similar loT UEs using a power saving function.

For example: triggering a set of loT devices to contact an application in the network, instructing a set of loT devices to shutdown, instructing a set of loT devices to turn on logging info, tuning configuration (like turning on street lights at different times), sending instructions to these devices to wake up at the same time, etc.

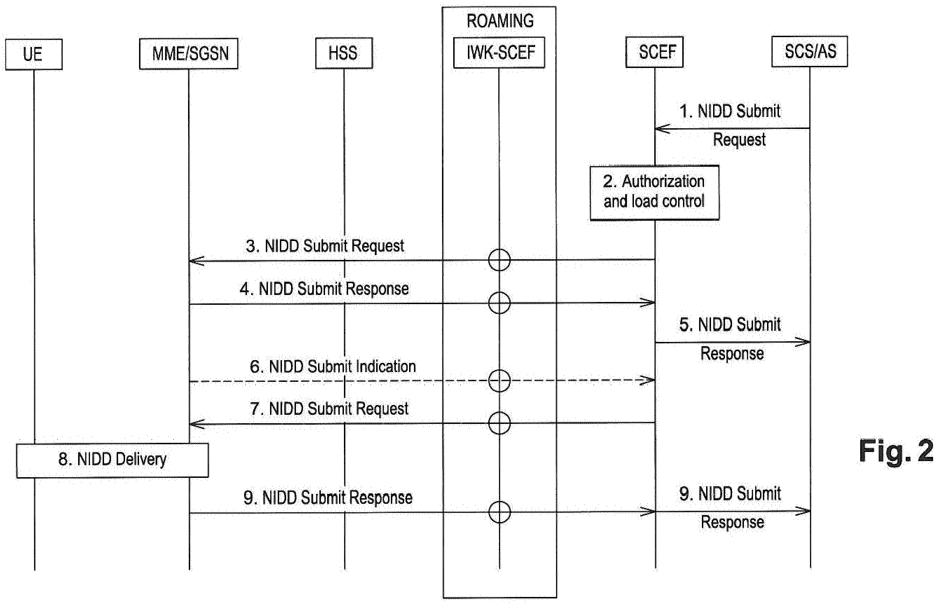

Following solutions that could be used today for sending a message to a group of UEs are not efficient solutions as explained below.
1. Mobile Terminated NIDD procedure:
   Today, SCEF uses the "Mobile Terminated NIDD procedure"as described in section 5.13.3 of 3GPP TS 23.682 v14.0.0 and recalled in figure 2. The procedure defined is for sending the message to a single UE. SCEF has to repeat the same procedure per UE when the message has to be sent to a number of UEs in a group.
   The sequence recalled in figure 2 is for supporting UEs including those using a power saving function e.g. extended DRX mode, for sending a message per UE.
   With such method a large number of messages needs to be exchanged between the SCS/AS and the SCEF, between the SCEF and HSS, and between the SCEF and the MME when the application layer message needs to be sent to a large number of UEs. This causes extensive signaling for group based message delivery.
2. Group Message Delivery mechanism based on MBMS:
   3GPP TS 23.682 v14.0.0 (subclauses 4.5.5 and 5.5.1) specifies a Group Message Delivery mechanism based on MBMS.
      This solution has a limited applicability as indicated in 3GPP TS 23.682:
      "The group message delivery using MBMS has limited applicability and does not support all the scenarios, e.g. UEs not supporting MBMS, UEs located in areas where MBMS is not deployed."
      Besides, this solution does not consider either UEs using a power saving function, which may be a in sleep mode for a very long duration, nor UEs in NB-loT access (for which MBMS is not supported in 3GPP yet, see subclause 4.10 of 3GPP TS 36.300).
3. Group based messaging using cell broadcast (see subclause 8.1.3.1 of 3GPP TR 23.887), i.e. using Cell Broadcast Service (CBS) or Public Warning System (PWS) type solution. However this solution has the following issues:
   - It has not been standardized (i.e. no reference point standardized between the SCEF and the CBC);
   - No means to report to the application whether the message has been received by the UEs or not;
   - The message would have to be broadcast multiple times to aid UEs within the group to receive it.

This solution does not consider either UEs using a power saving function, which may be in sleep mode for a very long duration, nor UEs in NB-loT access (for which PWS is not supported in 3GPP yet, see sub clause 4.10 of 3GPP TS 36.300).

Thus, an efficient solution for message delivery towards a group of UEs is needed. Embodiments of the invention in particular address such need.

Embodiments of the invention introduce a new group based message delivery mechanism between the SCEF and the MME, and more generally between the SCEF and the serving node of the UE, e.g. an MME, SGSN or 5G Core Control Function.

Embodiments of the invention allow to send the application layer message only once between the SCEF and the MME, which drastically minimizes the number of message exchanges between the SCEF and HSS, and between the SCEF and MME.

Embodiments of the invention allow to take into account any power saving function each UE of the group may be using.

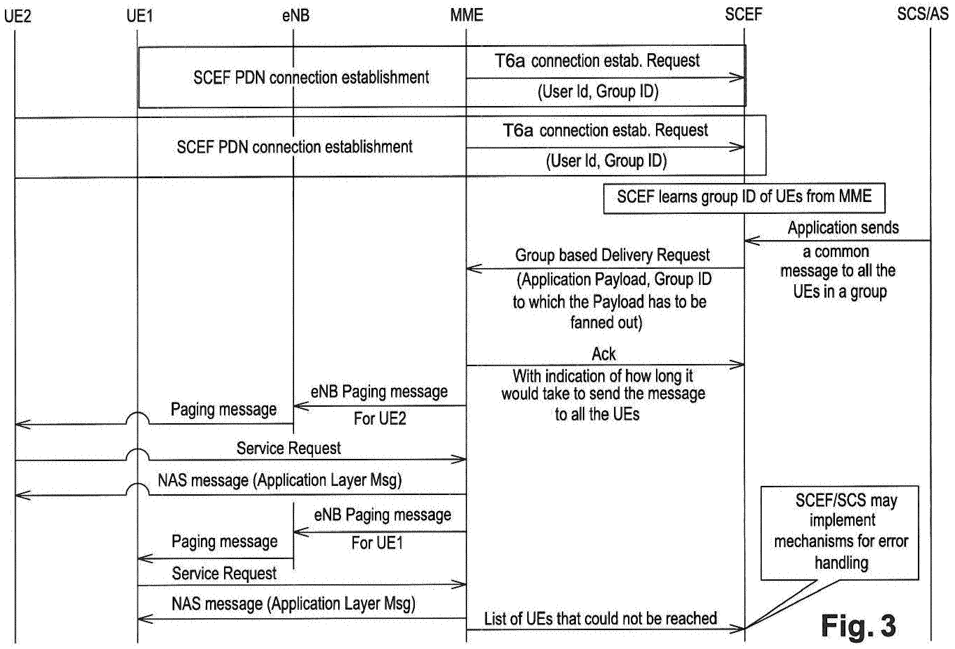

An example of Call-Flow using embodiments of the invention is illustrated in a simplified way in figure 3. Only for illustration purpose, figure 3 shows a group of UEs including two UEs (noted UE1, UE2) served by a MME; figure 3 also shows SCEF PDN connection establishment for each UE, including T6a connection establishment between MME and SCEF, in turn including the sending of a T6a connection establishment Request by MME to SCEF. Part or all of following steps illustrated in figure 3 may be used:
1) Application Server (AS) may send to the SCS/SCEF a common application layer message along with the application level identification of the group of the recipient UEs.
2) After receiving this message from the SCS/AS, the SCEF may map the received application level group ID of the UEs (that is defined between the AS and the SCS/SCEF) to the corresponding network level group ID of the UEs that it may have previously received from the MME (during the establishment of the T6a connection between the MME and SCEF: e.g. Group ID contained in T6a connection establishment Request) or from the HSS (which may not be the preferred option). The SCEF may send to the MME a Group based Delivery Request including the received common application layer message along with the group ID of the recipient UEs. The Group-based Delivery Request may take the form of a NIDD-Submit Request message or may be a new message.
3) MME may acknowledge the receipt of this message to the SCEF with an optional indication on how long it is expected to take to send the messages to all the UE in the group (considering when the UEs using a power saving function will become reachable).
4) MME may take the following action for each of the UE in the group:
   - If UE is in ECM-CONNECTED then MME may send the message to the UE;
   - If UE is in ECM-IDLE and is not using a power saving function, then MME may page and deliver the message to the UE.
   - If UE is in ECM-ILDE and is using a power saving function, then MME may page the UE at the next paging occasion (e.g. if the UE is using eDRX) or may wait for the UE to be reachable (e.g. if the UE is using PSM) and deliver the message to the UE.
   The MME may know the Group ID(s) to which a particular UE pertains via the subscription data downloaded from the HSS when the UE registers to the network.
5) Upon receiving the Paging message for itself, the UE may send a Service Request (paging response) message to the MME.
6) Upon receiving the Service Request, the MME may send the application layer message to the UE using Non-Access Stratum (NAS) function.
7) This process may take several minutes based on the reachability time of all the UEs in the group, e.g. based on the maximum eDRX cycle. After attempting to send the message to all the UE of the group, MME may send the list of UEs to whom the message could not be delivered to SCEF. The SCEF may then send the failure back to the AS and the AS can then determine if the message needs to be retransmitted by other means.

### Note:

If, in step 4, the MME determines that the destination UEs are currently not using a power saving function, then the MME may send a paging message to each of the Member UEs, pacing it (or distributing it over time for these destination UEs) in a way that it does not overload the (radio) network. The rest of the call-flow for an UE (including UE sending the Service Request and MME sending the application layer message) may be identical to the call-flow described above.

The sequence illustrated in figure 3 in particular shows the benefits of embodiments of the present invention on the message exchanges between the MME and SCEF.

For example, If an application layer message needs to be sent to 1000 UEs:
- The existing mechanism (as recalled above in connection with figure 2) requires: 1000x5 messages between the SCEF and MME, and 1000 messages between the SCEF and HSS.
- In contrast, embodiments of the invention (e.g. as illustrated in figure 3) may require only 3 messages.

Further embodiments of the invention relate in particular to the handling of non stationary UEs or devices (e.g. loT devices). Several options may be considered as described below :

### Option 1:

To support non stationary devices, the Group-based Delivery Request may include a Message Identifier (generated by the SCEF or provided by the SCS/AS). This allows to:
o enable the network to track the messages already delivered to a given UE while the Group based delivery procedure is on-going (e.g. over the last hour);
o avoid to retransmit the same message to the UE when the UE moves across MMEs or when its detaches and reattaches to the same or different MME while the Group based delivery procedure is on-going and the old MME already delivered the message to the UE;
o enable the new MME to deliver the message to the UE when the UE moves across MMEs or when its detaches and reattaches to the same or different MME while the Group based delivery procedure is on-going and the old MME did not deliver the message to the UE;

This may require the old MME to signal to the new MME, e.g. via the GTPv2 Identification Response or Context Response message, which messages have been delivered (or not delivered) yet to the UE.

The SCEF may include the same Message Identifier in the Group-based Delivery Request sent towards all the MMEs serving UEs within the Group ID.

Note that when a UE moves across MMEs, the new MME sends a T6a connection update request to the SCEF to update the SCEF about the new Serving MME of the UE. If the SCEF had not yet initiated the group message delivery in this MME (i.e. if there had not been any UEs of the Group in that MME so far), the SCEF may do so as a result of the first T6a connection update, using the same Message Identifier. The new MME will know, based on the Message Identifier exchanged between MMEs, which UEs may need to receive this message.

### Option 2:

The Group-based Delivery Request may include a Start Time indicating the UTC time at which the SCEF starts the group based delivery of this message. When the MME delivers a message to the UE, it may also store the (UTC) Last Delivery time at which the last message is sent to the UE. Upon mobility to a new MME, the old MME may signal to the new MME, e.g. via the GTPv2 Identification Response or Context Response message, the Last Delivery Time. This allows:
o the network to track the messages already delivered to a given UE while the Group based delivery procedure is on-going, by comparing the Start Time of pending messages vs. the Last Delivery Time of the UE. A Start Time more recent than the Last Delivery Time indicates that the message has not been delivered yet to the UE. A Last Delivery Time more recent than the Start Time indicates that the message has already been delivered to the UE.
   There is one Start Time per Message to be sent via the Group based Delivery procedure.
   There is one single Last Delivery Time per UE (i.e. not per UE and per message).
o to avoid to retransmit the same message to the UE when the UE moves across MMEs or when its detaches and reattaches to the same or different MME while the Group based delivery procedure is on-going and the old MME already delivered the message to the UE;
o enabling the new MME to deliver the message to the UE when the UE moves across MMEs or when its detaches and reattaches to the same or different MME while the Group based delivery procedure is on-going and the old MME did not deliver the message to the UE;

The SCEF may include the same TimeStamp in the Group-based Delivery Request sent towards all the MMEs serving UEs within the Group ID.

Note that when a UE moves across MMEs, the new MME sends a T6a connection update request to the SCEF to update the SCEF about the new Serving MME of the UE. If the SCEF had not yet initiated the group message delivery in this MME (i.e. if there had not been any UEs of the Group in that MME so far), the SCEF may do so as a result of the first T6a connection update, using the same Start Time. The new MME will know, based on the Last Delivery Time exchanged between MMEs, which UEs may need to receive this message.

### Option 3:

The group delivery mechanism needs to be able to send the same instructions (i.e., message) to similar loT devices in a geographical area. MME can cover quite a large area and even a non stationary device moving from one MME to another is not that common. So to keep the implementation simple, it could be left to the application initiating the message to determine which UEs have received the message and handle failures appropriately.

Embodiments of the invention thus provide an optimized solution that dramatically reduces the number of messages exchanged between the MME and SCEF, and which takes into account any power saving function each UE of the group may be using.

Various aspects and/or embodiments of the invention include (though not being limited to) following aspects and/or embodiments.

Some aspects are related to a serving node of a mobile network, such as MME or SGSN.

Various embodiments are provided, including (though not being limited to) following embodiments, which may be taken alone or in combination, according to various combinations.

In an embodiment, said serving node is configured to:- support message delivery towards UEs via the serving node, said message delivery referred to as group based message delivery, wherein a message to be delivered to a group of UEs is received by the serving node via a SCEF only once for the group of UEs.

In an embodiment, said serving node is configured to:
- receive from the SCEF a request for group based message delivery, such as NIDD Submit Request, including a Group ID identifying the group of UEs.

In an embodiment, said serving node is configured to:
- provide to the SCEF an indication of a time expected to deliver the message to the served UEs of the group, such as in an acknowledgment of receipt of a request for group based message delivery.

In an embodiment, said serving node is configured to perform a group based message delivery procedure including at least one of:
- if a served UE of the group is in connected state, send the message towards the UE,
- If a served UE of the group is in idle state and is not using a power saving function, page the UE,
- If a served UE of the group is in idle state and is using a power saving function, page the UE at a next paging occasion or wait for the UE to be reachable.

In an embodiment, said serving node is configured to:
- distribute over time the paging of served UEs of the group that are in idle state and not using a power saving function.

In an embodiment, said serving node is configured to:
- provide to the SCEF a list of UEs to which the message could not be delivered.

In an embodiment, said serving node is configured to:
- determine a group to which a served UE pertains, based on subscription data associated with the UE.

In an embodiment, said serving node is configured to:
- provide to the SCEF a Group ID identifying a group to which a served UE pertains, such as in a request for PDN connection establishment to the SCEF, such as a T6a or T6b connection request.

In an embodiment, said serving node is configured to:
- upon serving node relocation for a served UE, from the serving node referred to as old serving node, to a new serving node, during an ongoing group based message delivery, signal to the new serving node a message identifier indicating if the message has not yet been delivered to the UE by the old serving node.

In an embodiment, said serving node is configured to:
- upon serving node relocation for a served UE, to the serving node referred to as new serving node, from an old serving node, during an ongoing group based message delivery, initiate group based message delivery towards the UE based on a message identifier signalled by the old serving node, which corresponds to a message identifier contained in a request for group based message delivery received by the new serving node.

In an embodiment:
- said message identifier is signalled by the old serving node to the new serving node in a GTPv2 message, such as Identification Response message or Context response message.

In an embodiment, said serving node is configured to:
- store a Last Delivery time at which a last message has ben delivered to a served UE,
- upon serving node relocation for the served UE, from the serving node referred to as old serving node, to a new serving node, during an ongoing group based message delivery, signal to the new serving node the Last Delivery time stored for the UE.

In an embodiment, said serving node is configured to:
- upon serving node relocation for a served UE, to the serving node referred to as new serving node, from an old serving node, during an ongoing group based message delivery, initiate group based message delivery towards the UE based on a Last Delivery time to the UE, signalled by the old serving node, which is less recent than a group based message delivery start time contained in a request for group based message delivery received by the new serving node.

In an embodiment:
- said Last Delivery time is signalled by the old serving node to the new serving node in a GTPv2 message, such as Identification Response message or Context response message.

Other aspects are related to a Service Capability Exposure Function SCEF.

Various embodiments are provided, including (though not being limited to) following embodiments, which may be taken alone or in combination, according to various combinations.

In an embodiment, said SCEF is configured to:
- support message delivery towards UEs via a serving node such as MME or SGSN, said message delivery referred to as group based message delivery, wherein a message to be delivered to a group of UEs is sent by the SCEF to the serving node only once for the group of UEs.

In an embodiment, said SCEF is configured to:
- receive from a SCS/AS a common message to send towards the UEs of the group.

In an embodiment, said SCEF is configured to:
- send to the serving node a request for group based message delivery, such as NIDD Submit Request, including a Group ID identifying the group of UEs.

In an embodiment, said SCEF is configured to:
- receive from the serving node an indication of a time expected to deliver the message to the served UEs of the group, such as in an acknowledgment of receipt of a request for group based message delivery.

In an embodiment, said SCEF is configured to:
- receive from the serving node a list of UEs to which the message could not be delivered.

In an embodiment, said SCEF is configured to perform at least one of:
- receive from a SCS/AS an application level group identifier identifying a group of UEs at application level,
- receive from the serving node a request for PDN connection establishment to the SCEF, such as a T6a or T6b connection request, including a Group ID identifying at mobile network level a group of UEs to which a UE pertains,
- receive from a HSS a Group ID identifying a group of UEs at mobile network level,
- map an application level group identifier identifying a group of UEs at application level, to a Group ID identifying the group of UEs at mobile network level.

In an embodiment, said SCEF is configured to:
- send to the serving node a request for group based message delivery including at least one of a message identifier or a group based message delivery start time.

In an embodiment, said SCEF is configured to:
- upon serving node relocation for a served UE, from an old serving node to a new serving node, during an ongoing group based message delivery, initiate a group based message delivery in the new serving node if not already initiated.

Other aspects relate to other entities such as SCS/AS.

Other aspects are related to method(s) for support of group based message delivery in a mobile system, comprising at least one step performed by at least one entity, such as (although not limited to) a thus configured serving node and/or SCEF.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A serving node of a mobile network, such as MME or SGSN, configured to:
- support message delivery towards UEs via the serving node, said message delivery referred to as group based message delivery, wherein a message to be delivered to a group of UEs is received by the serving node via a SCEF only once for the group of UEs.

2. A serving node according to claim 1, configured to:
- receive from the SCEF a request for group based message delivery, such as NIDD Submit Request, including a Group ID identifying the group of UEs.

3. A serving node according to claim 1 or 2, configured to:
- provide to the SCEF an indication of a time expected to deliver the message to the served UEs of the group, such as in an acknowledgment of receipt of a request for group based message delivery.

4. A serving node according to any of claims 1 to 3, configured to perform a group based message delivery procedure including at least one of:
- if a served UE of the group is in connected state, send the message towards the UE,
- If a served UE of the group is in idle state and is not using a power saving function, page the UE,
- If a served UE of the group is in idle state and is using a power saving function, page the UE at a next paging occasion or wait for the UE to be reachable.

5. A serving node according to any of claims 1 to 4, configured to:
- distribute over time the paging of served UEs of the group that are in idle state and not using a power saving function.

6. A serving node according to any of claims 1 to 5, configured to:
- provide to the SCEF a list of UEs to which the message could not be delivered.

7. A serving node according to any of claims 1 to 6, configured to:
- determine a group to which a served UE pertains, based on subscription data associated with the UE.

8. A serving node according to any of claims 1 to 7, configured to:
- provide to the SCEF a Group ID identifying a group to which a served UE pertains, such as in a request for PDN connection establishment to the SCEF, such as a T6a or T6b connection request.

9. A serving node according to any of claims 1 to 8, configured to:
- upon serving node relocation for a served UE, from the serving node referred to as old serving node, to a new serving node, during an ongoing group based message delivery, signal to the new serving node a message identifier indicating if the message has not yet been delivered to the UE by the old serving node.

10. A serving node according to any of claims 1 to 9, configured to:
- upon serving node relocation for a served UE, to the serving node referred to as new serving node, from an old serving node, during an ongoing group based message delivery, initiate group based message delivery towards the UE based on a message identifier signalled by the old serving node, which corresponds to a message identifier contained in a request for group based message delivery received by the new serving node.

11. A serving node according to claim 9 or 10, wherein:
- said message identifier is signalled by the old serving node to the new serving node in a GTPv2 message, such as Identification Response message or Context response message.

12. A serving node according to any of claims 1 to 11, configured to:
- store a Last Delivery time at which a last message has ben delivered to a served UE,
- upon serving node relocation for the served UE, from the serving node referred to as old serving node, to a new serving node, during an ongoing group based message delivery, signal to the new serving node the Last Delivery time stored for the UE.

13. A serving node according to any of claims 1 to 12, configured to:
- upon serving node relocation for a served UE, to the serving node referred to as new serving node, from an old serving node, during an ongoing group based message delivery, initiate group based message delivery towards the UE based on a Last Delivery time to the UE, signalled by the old serving node, which is less recent than a group based message delivery start time contained in a request for group based message delivery received by the new serving node.

14. A serving node according to claim 12 or 13, wherein:
- said Last Delivery time is signalled by the old serving node to the new serving node in a GTPv2 message, such as Identification Response message or Context response message.

15. A Service Capability Exposure Function SCEF, configured to:
- support message delivery towards UEs via a serving node such as MME or SGSN, said message delivery referred to as group based message delivery, wherein a message to be delivered to a group of UEs is sent by the SCEF to the serving node only once for the group of UEs.

16. A SCEF according to claim 15, configured to:
- receive from a SCS/AS a common message to send towards the UEs of the group.

17. A SCEF according to claim 15 or 16, configured to:
- send to the serving node a request for group based message delivery, such as NIDD Submit Request, including a Group ID identifying the group of UEs.

18. A SCEF according to any of claims 15 to 17, configured to:
- receive from the serving node an indication of a time expected to deliver the message to the served UEs of the group, such as in an acknowledgment of receipt of a request for group based message delivery.

19. A SCEF according to any of claims 15 to 18, configured to:
- receive from the serving node a list of UEs to which the message could not be delivered.

20. A SCEF according to any of claims 15 to 19, configured to perform at least one of:
- receive from a SCS/AS an application level group identifier identifying a group of UEs at application level,
- receive from the serving node a request for PDN connection establishment to the SCEF, such as a T6a or T6b connection request, including a Group ID identifying at mobile network level a group of UEs to which a UE pertains,
- receive from a HSS a Group ID identifying a group of UEs at mobile network level,
- map an application level group identifier identifying a group of UEs at application level, to a Group ID identifying the group of UEs at mobile network level.

21. A SCEF according to any of claims 15 to 20, configured to:
- send to the serving node a request for group based message delivery including at least one of a message identifier or a group based message delivery start time.

22. A SCEF according to any of claims 15 to 21, configured to:
- upon serving node relocation for a served UE, from an old serving node to a new serving node, during an ongoing group based message delivery, initiate a group based message delivery in the new serving node if not already initiated.

23. A method for support of group based message delivery in a mobile system, said method including at least one step performed by at least one of a serving node of a mobile network such as MME or SGSN configured according to any of claims 1 to 14, and a SCEF configured according to any of claims 15 to 22.
